# EUROPEAN PATENT SPECIFICATION

(11) **EP 3 006 346 B1**
(45) Date of publication and mention of the grant of the patent: **24.08.2016**
(21) Application number: 14188487.4
(22) Date of filing: 10.10.2014
(51) Int. Cl.: B64F 1/34

(54) **Mobile Ground Power Unit with enhanced housing concept**
Mobile Bodenversorgungseinheit mit verbessertem Gehaeusekonzept
Unité mobile d'alimentation avec un concept amélioré de boitier

(43) Date of publication of application: 13.04.2016
(73) Proprietor: Illinois Tool Works Inc., Glenview, IL 60025 (US)
(72) Inventor: Tindall, Leslie, Ashford, Kent TN23 1DZ (GB)
(74) Representative: Verbrugge, Vivien François Emeric

(56) References cited:
- EP-A1- 0 445 047
- EP-A2- 1 124 046
- EP-A2- 1 146 212
- GB-A- 2 442 345
- US-A- 5 253 891
- US-A1- 2004 011 918

## Description

This invention relates to ground power units (GPU) for supplying power to an aircraft parked on the ground.

Such a ground power unit is disclosed in US 2004/0011918 A1 or in US 5,253,891 A. It usually comprises an engine, driving an electric generator, both inserted in a housing to protect it from environmental influences. Such housings traditionally consist of many different parts and of bent steel.

The inventor found it very disadvantageous that for the assembling of the housing many steps are needed and that the GPUs according to the state of the art need extra protection bumpers to lower the risk of damage in the case of a collision e.g. with the parked airplane or other ground support equipment.

The object of the invention therefore was to provide a housing, that is easy to assemble and that provides better collision safety, or at least same collision safety by simplified means.

This object is achieved by the subject matter of the independent claims; preferred embodiments are specified by the dependent claims.

Particularly, this object is achieved by a mobile ground power unit for supplying power to an aircraft parked on the ground, the ground power unit comprising the features of claim 1.

The object of the invention is also achieved by a component of a housing for a ground power unit according to claim 12.

The object of the invention is also achieved by a method for manufacturing a mobile ground power unit for supplying power to an aircraft parked on the ground, comprising the steps of claim 13.

Hereby, on the one hand the housing can be built of larger, integrally molded components and therefore the part count as well as the complexity for assembly is reduced; on the other hand, rotor molding or rotor casting result in a component that does not exhibit sharp edges or corners and the overall structure can be easily designed for being resilient enough to act as a bumper per se but having enough impact resistance. The inventor found out that unexpectedly, rotor molded or rotor cast components also come along with even more advantages: low productions costs, low weight and ease of handling of the resulting housing, high electrical resistance, good acoustic damping and the property of being corrosion free and chemical resistant.

Preferably, the mobile ground power stands on wheels. Usually, it is equipped with a towing arm. The GPU is preferably set up to output 28 V of direct current and/or 115 V 400 Hz of alternating current. Preferably, the electric energy is carried from a generator to a connection on the aircraft via cables, for example a 3 phase 4-wire insulated cable capable of handling 261 A (90 kVA).

Preferably, the housing of the ground power unit is a component or group of components that surrounds the engine and/or the generator at least partially, particularly at the sides and/or the top of engine and/or generator. The housing is preferably the outer shell of the ground power unit.

Preferably, the housing features at least one rotor molded or rotor cast component, by having one or more components manufactured by the process of rotor molding or rotor casting. For example, such a component can be a cover, a canopy, a cable tray, a box-shaped or rounded container (e.g., with vertical walls and a horizontal top and/or bottom opening). Preferably the one or more rotor molded/cast component serves as an outer shell or part of the outer shell of the housing.

Preferably, the component contains mold in graphics or text bearing information for the use or about the vendor of the component of the ground power unit. Thereby, this information does not get lost because of scratching or delamination.

Preferably, rotor molding involves a heated hollow mold which is filled with a charge or shot weight of material. It is then slowly rotated (usually around two perpendicular axes) causing the softened material to disperse and stick to the walls of the mold and after the material has cooled down, it can be taken out of the mold. Rotor casting preferably uses self-curing resins in an unheated mold, but shares slow rotational speeds in common with rotational molding.

The material of the rotor molded or cast component is or contains most preferably plastics, for example Polyethylene; preferably the material may be or (also) contain one of the following: Polypropylene, Polyvinylchloride, Nylon, Polycarbonate, Acrylonitrile butadiene styrene (ABS), Acetal, Acrylic, Epoxy, Fluorocarbons, Ionomer, Polybutylene, Polyester, Polystyrene, Polyurethane, Silicone.

In a further preferred embodiment of the GPU according to the present invention, the housing features as the at least one rotor molded or rotor cast component: a canopy covering at least the upper side of the engine and/or the generator. In another preferred embodiment of the component, the component is a corresponding canopy. In another preferred manufacturing method, the component of the housing is a corresponding canopy.

Thereby, a light-weight, non-complex top cover for engine and/or generator is provided, that may - because of its low weight - easily be mounted and unmounted.

Preferably, the canopy covers also at least two, preferably three vertical sides of the engine and/or generator. Preferably, the canopy is configured to slide on the chassis or on another housing part so as to be retractable by a sliding movement. The canopy, especially the canopy having the sliding design, offers the benefit of a fast easy access to servicing points and of an easy removal for major work and access to the generator.

In another preferred manufacturing method, the canopy is molded/cast having one or more of the features of the canopy mentioned in this description.

In a further preferred embodiment of the GPU or the rotor molded/cast component being a canopy according to the present invention, the canopy comprises an inner wall facing inside the housing and an outer wall facing outside the housing, wherein the inner wall and the outer wall define a hollow space between each other.

Thereby, an even better acoustic damping is achieved. Preferably, the hollow space contains one or more cables (therefore, cables are easily trimmable) and/or damping material (very high acoustic damping) and/or a ducting system. Like that, the hollow space can be used for different functions. Especially in this case, the positive synergetic effect should be emphasized that is present between the feature of the canopy having an inner and an outer wall with a hollow space in between and the feature of the canopy being a rotor molded/cast component. Such hollow shapes are particularly well suited to be produced by rotor molding/casting.

Preferably, the outer wall is having at least one area consisting of a single piece that is covering an (preferably all the) upper side of the engine (and generator) and that extends downwards along at least two (preferably three) different vertical sides of the ground power unit (preferably of the engine and/or generator). This area has the advantage that no connections, hinge-joints or crevices disrupt the canopy and therefore, noise cannot escape through such disruptions. The single piece is preferably extending from the bottom of the canopy at one lateral side up, it extends then horizontally over the engine and/or generator and it further extends down to the opposite buttom of the canopy. Preferably, it also extends from the horizontal area further backwards, forming a third vertical area.

In a further preferred embodiment of the GPU or the canopy according to the present invention, the inner wall features a horizontal area covering the upper side of the engine. Thereby, the damping effect is present along the top part of the canopy.

In a further preferred embodiment of the GPU or the canopy according to the present invention, the inner wall is extending from the horizontal area downwards along at least one (preferably two or three) vertical side of the ground power unit (preferably of the engine and/or generator). Thereby, the damping effect is even more enhanced, as at the vertical sides, noise is being damped, too.

In a further preferred embodiment of the GPU or the canopy according to the present invention, the inner wall is opposing the outer wall on more than 75 % of the outer wall's inner surface area. Having an inner wall that extends over such a high fraction of the inner surface of the outer wall provides particularly good damping results.

In a further preferred embodiment of the GPU or the canopy according to the present invention, the canopy consists of one single piece that is rotor molded or rotor cast. Thereby, the assembly is quicker, as the canopy including the inner wall providing the damping effect does not need to be put together from multiple parts. Furthermore, robustness is increased and as there are no connections between parts, there are no possible leaks for noise to escape.

In a further preferred embodiment of the GPU or the rotor molded/cast component being a canopy according to the present invention, the canopy comprises an integrated ducting system, whereby the ducting system comprises an inlet opening within the outer wall of the canopy.

Thereby, fresh air can be taken from outside and can be guided and distributed through the ducting system. Preferably, the hollow space constitutes an air channel for exchanging fluid between the inside and the outside of the housing. Preferably, the inlet opening is located in an approximately vertical or projecting or downward facing part of the outer wall, which provides a better rain protection of the inlet opening. Therefore, no protruding rain cowls for the opening are necessary.

Preferably, the ducting system comprises at least one duct, common for two or more purposes (e.g. forwarding air to the engine intake for the combustion process and for cooling the engine). Particularly preferable the ducting system comprises two or more ducts, that are - within the canopy - separate from each other.

In a further preferred embodiment of the GPU or the rotor molded/cast component being a canopy according to the present invention, the ducting system comprises at least one exhaust opening within the inner wall of the canopy.

Thereby, the fresh air that has come through the inlet opening can be exhausted into the inner space of the housing. Preferably, the inlet opening and the outlet opening are offset from each other (such that they are not vis-à-vis or concentrically or even not overlapping or even further no line of sight between inlet and exhaust opening). Like this, the inlet and outlet are at different locations of the canopy, such that air can be inlet where it is best suitable, and air can be exhausted, where the air is needed. This minimizes the need for hoses or other ducting means inside the housing, as a part of the housing - the canopy - takes over this function.

Preferably, the exhaust opening is located vis-à-vis an air-intake of the engine, esp. combustion engine, e.g. vis-à-vis the air filter intake. Thereby, air can be exhausted from the hollow space of the canopy into the air intake filter. Induction air quality is vital for efficient and reliable operation of modern internal combustion engines. The air must be dry, clean and cool to satisfy the engine manufacturers' installation requirements. Taking the air from inside the housing will provide clean, dry air but the air in the housing usually 5-10 degrees warmer than the ambient air. This will reduce the limited ambient temperature range at which the machine will operate before the over temperature protection shuts the engine down. By using the hollow canopy as an air duct, the air can be taken from outside the housing without the need of a rain cowl and - if wanted - even without further separate ducting components.

Thereby, the air at the engine intake can be maintained at near ambient air temperature, it can be maintained dry, one may not use further separate ducting components, no components projecting above canopy that can be damaged are needed and it can be made use of the hollow space of the roto-molded/cast canopy.

In a further preferred embodiment of the GPU or the canopy according to the present invention, the exhaust opening is located within the horizontal area of the inner wall. Thereby, fresh air can be distributed along the horizontal area and let out at specific location above the engine/generator. This offers flexibility in choosing the areas to direct fresh air to and on the other hand, as fresh air is usually colder and tends to fall down to the desired area (e.g., air intake or engine surrounding), the air flow is very beneficial.

In a further preferred embodiment of the GPU or the rotor molded/cast component being a canopy according to the present invention, the exhaust opening is located above and/or at the side of the engine.

Thereby, an advantageous cooling of the engine is achieved. Internal engines, especially combustion engines, produce a considerable amount of waste heat which is dissipated via a liquid cooler and very often a charge air cooler mounted in front of the engine. Air is blown across these coolers by a fan driven off the engine. This cooling air is normally drawn in at the generator end of a GPU, across the engine and out through the cooling pack. When the air reaches the cooling pack it has increased in temperature by up to 10 degrees due to the waste heat from the generator and the engine. There is also a radiation heating effect on the inside surfaces of the canopy. The area directly above the engine is where the highest surface temperatures are measured. To maintain the structural integrity of a polyethylene canopy it is best practice to keep the surface temperature below 70° C. By drawing cooling air through the hollow part of the canopy it is possible to direct air at near ambient temperature to the area above or at the side of the engine.

When the exhaust opening is located above the engine, an additional benefit is that near ambient air is delivered to the top part of the cooling pack where the highest temperatures are present. This improves the performance of the cooling pack and raises the limited ambient temperature range of the machine. There are also acoustic benefits from having a complex air intake duct. There is no direct line of sight to the engine or cooling fan which are the main noise sources on a GPU.

In a further preferred embodiment of the GPU or the rotor molded/cast component being a canopy according to the present invention the exhaust opening is covered by a heat shield which is permeable to air.

Thereby, the heat shield protects the inner canopy surface from the direct radiant heat. The heat shield is preferably made of metal, e.g. a metal louvered or perforated plate or mesh.

In a further preferred embodiment of the GPU or the rotor molded/cast component being a canopy according to the present invention, the exhaust opening is surrounded by a seal, which connects to an air intake of the combustion engine.

Thereby, the efficiency of providing ambient dry air to the engine is increased. The sealing is preferably a soft rubber or neoprene sealing. It may be fixed to the exhaust opening or to the air intake opening of the engine. Preferably, the canopy is a sliding canopy and the seal is automatically put in position when the canopy is closed.

In a further preferred embodiment of the GPU or the canopy according to the present invention, the ducting system comprises at least two exhaust openings, wherein one of the exhaust openings (which is preferably covered by the heat shield) is set up for providing cooling air to the surrounding of the engine, whereas another of the exhaust openings (which is preferably surrounded by a seal which connects to the air intake) is set up to specifically direct air into the air intake of the engine. Thereby, on the one hand, cooling air is provided for the engine, on the other hand, specifically provisioned air for the engine air intake is provided. This enhances the cooling of and air supply for the engine.

In a further preferred embodiment of the GPU or the canopy according to the present invention, the inlet opening is located on one end of the ground power unit, wherein this one end is vis-à-vis an other end of the ground power unit, wherein the other end of the ground power unit comprises a housing exhaust, set up for letting escape used air out of the housing. Thereby, an airflow through the ground power unit is provided that does not need to change direction laterally and hence, the flow resistance is low. In this set up, the engine is between the inlet opening and the housing exhaust. At the housing exhaust there is preferably a ventilator of the liquid cooling circuit of the engine.

In a further preferred embodiment of the GPU according to the present invention, the housing features as the at least one rotor molded or rotor cast component: a cable tray, preferably arranged sideways in relation to the engine and/or the electric generator. In another preferred embodiment of the component, the component is a corresponding cable tray. In another preferred manufacturing method, the component of the housing is a corresponding cable tray.

Thereby, a lightweight cable tray that is able to act as a lateral bumper is provided. GPUs traditionally have cable trays fabricated in steel. The cable trays are normally the outer most extremity of a GPU and tend to suffer from knocks, scrapes and corrosion. Many GPU operators will ask for bumper strips to be fitted to steel cable trays to reduce damage caused by collisions and knocks. A rotor molded/cast side tray, especially one of Polyethylene, has high impact resistance and will deform under load without permanent damage or unsightly paint scrapes. The molded part is the same color throughout so a scrape or gouge will not discolor like paintwork.

Preferably, the cable tray exhibits one or more a rounded edges, preferably the outmost edge(s) at the lateral long sides of the GPU. Preferably the edge radius is more than 3 mm, particularly preferable more than 5 mm, most particularly preferable more than 10 mm. Another popular feature on traditional steel trays are cable tray rollers on the top edge of the tray to reduce the drag when cables are being pulled out of the tray. Output cables are heavy and difficult to handle. The rounded edges of the rotomolded tray and the waxy surface of polyethylene material eliminate the need for rollers. Rounded edges furthermore reduce the risk of harm to operators. Having very high electrical resistance also reduces the risk of an operator being shocked by a damaged cable with exposed conductors.

In another preferred manufacturing method, the cable tray is molded/cast having one or more of the features of the cable tray mentioned in this description.

In a further preferred embodiment according to the present invention the cable tray comprises an integrally molded battery compartment.

Thereby, the risk of a short circuit when removing battery terminals is reduced, especially when using the Polyethylene or another well isolating material. The separate compartment also reduces the risk related to hydrogen build up as there is no ignition source in the battery compartment - as the battery is separated from the engine. Preferably, the compartment has one or more ventilation holes for gas or fluid to escape, which helps to reduce/prevent hydrogen build.

In a further preferred embodiment of the GPU according to the present invention the ground power unit comprises a fuel tank, wherein the fuel tank comprises a wall that forms at least one channel that allows air to pass from one side of the fuel tank to another side of the fuel tank. In another preferred manufacturing method, the manufacturing includes building and/or mounting a corresponding fuel tank.

Thereby, dry clean and cool air can be drawn from below the GPU without spending much more space for suitable ducting components, as the tank itself acts as a ducting component. Furthermore, the air passing the fuel tank is cooling the fuel inside the fuel tank.

The generator in a GPU requires dry, clean and cool air for cooling. A large volume of air is required which means that the precipitation can be drawn in if the intake opening is exposed to the weather. Another issue with modern diesel engines is keeping the fuel cool. Diesel fuel is used as a coolant to cool the injector pump and is returned warm to the fuel tank. The fuel returning from the injector pump gradually increases the temperature of the tank. If the fuel temperature exceeds the limits defined by the engine manufacturer then an additional fuel intercooler is required. By drawing the generator cooling air through a, preferably molded, duct in the fuel tank it is possible to remove heat from the fuel without having to add a separate cooler to the fuel circuit.

Preferably, the fuel tank is a rotor molded or rotor cast component. One of the down sides of using polyethylene tanks is that the material insulates the fuel better than steel tanks and it is more likely that fuel coolers are required. However, by incorporating the channel into the fuel tank, this down side is compensated for and one can on the other side benefit from the advantages a rotor molded / cast component offers (as already mentioned, e.g., low cost, impact resistance, chemical resistance, etc.). Therefore, one can use a rotor molded/cast tank, esp. Polyethylene tank, without increasing the fuel temperature.

Preferably, the other side of the fuel tank is a side approximately perpendicular to the one side, particularly preferable it is the other side of the fuel tank is approximately parallel vis-à-vis the one side. Preferably, the tank is located below generator and engine.

Preferably, the channel is located in the tank at a position that is - when the tank is disposed inside the housing of the GPU - below and vis-à-vis the generator or below and at one side of the generator such that the generator is in between the channel and an ventilator and therefore and air stream will hit the generator. Particularly preferably, the channel is positioned precisely at a generator air intake.

Especially in this case, the positive synergetic effect should be emphasized that is present between the feature of the fuel tank having a channel and the feature of the canopy having a ducting system. By this combination, air can be drawn inside the housing from different inlets using (also) a common ventilator, usually the ventilator of the liquid cooling system of the engine.

In a further preferred embodiment according to the present invention the wall of the fuel tank is surrounding the channel except for an inlet opening and an outlet opening of the channel.

Thereby, the effective surface for cooling the fuel is high. The channel is completely passing through the tank which also provides for an advantageous air flow.

In a further preferred embodiment according to the present invention the channel has an inlet on the bottom side of the fuel tank and an outlet on the top side of the fuel tank.

Thereby, cool dry air is able to enter from below and to be drawn through the tank vertically. This enables an effective air flow with short flow distances.

Embodiments of the present invention will now be described - by way of example only - with reference to the accompanying drawings, whereby
Fig. 1a, b are sketches of a GPU according to the invention, having rotor molded or rotor cast components,
Fig. 2a-2g are drawings of a GPU according to the invention based on Fig. 1 a and 1 b incorporating as well many of the advantageous preferred features.

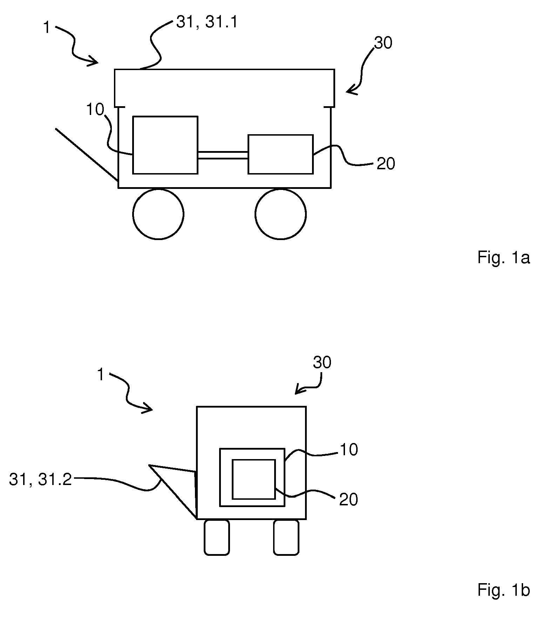

**Fig. 1a, b** are showing a GPU 1 according to the invention, having rotor molded or rotor cast components 31, 31.1, 31.2. The GPU 1 comprises an engine 10 and an electric generator 20. The electric generator 20 is configured to be driven by the engine. The GPU comprises a housing 30 whereby the engine 10 and the electric generator 20 are disposed within the inside of the housing 30, which features at least one rotor molded or rotor cast component 31. **Fig. 1a** shows an example of a cover- or canopylike component 31.1 as a side view, **Fig. 1****b** an example of a side tray component 31.2. as back view.

The GPU 1 is manufactured by mounting the engine 10 and the electric generator 20 and connecting the engine 10 and the electric generator 20 such that the electric generator 20 is configured to be driven by the engine 10. Then a housing 30 is provided for the engine 10 and the electric generator 20, wherein for this, at least one component 31 of the housing 30 is built by rotor molding or rotor casting.

This allows to build/have a GPU with one or more lightweight, safe and low cost producible housing component.

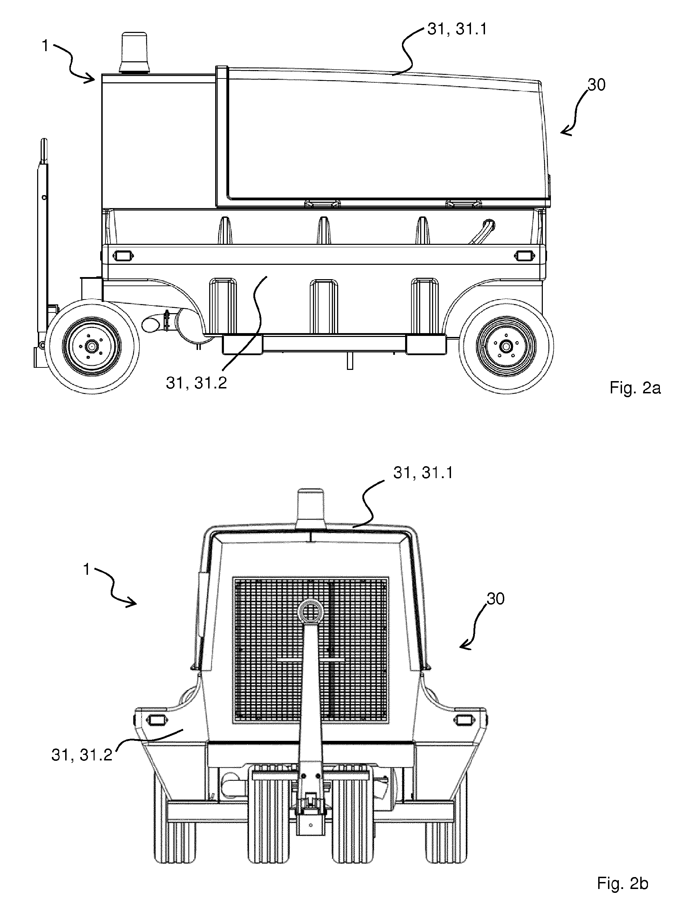

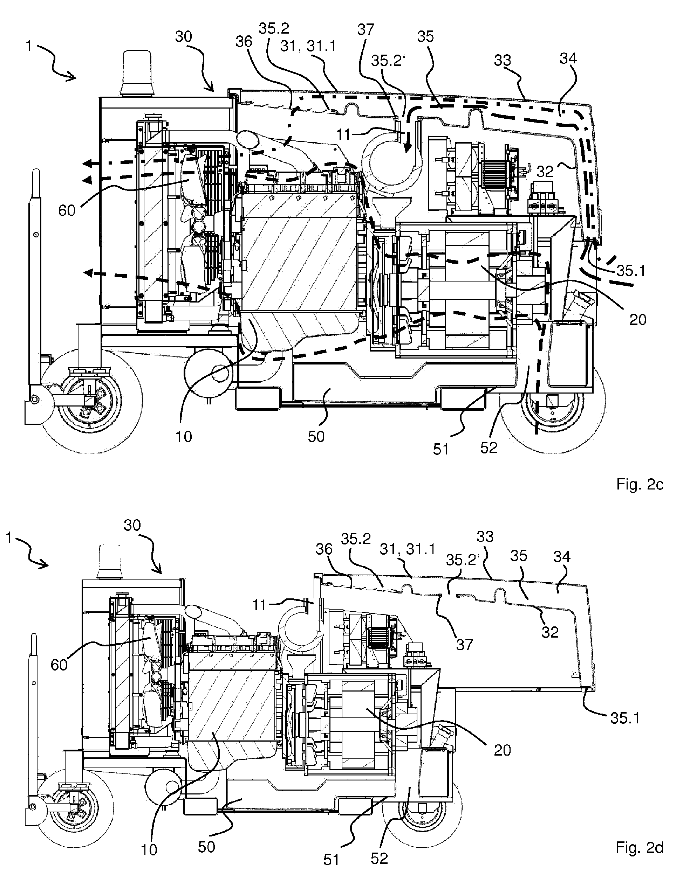

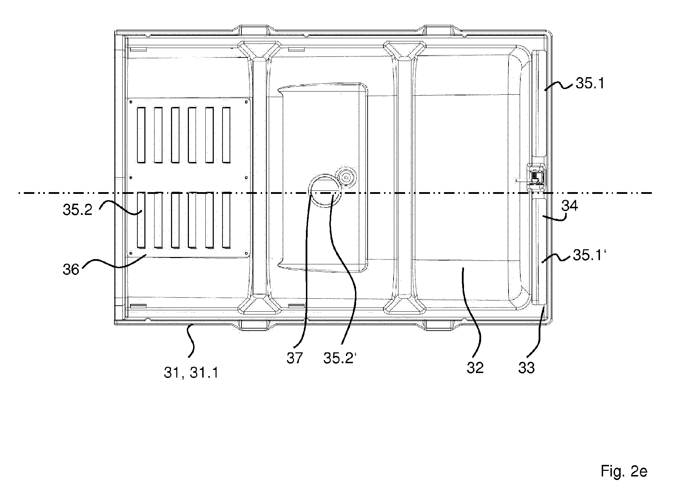

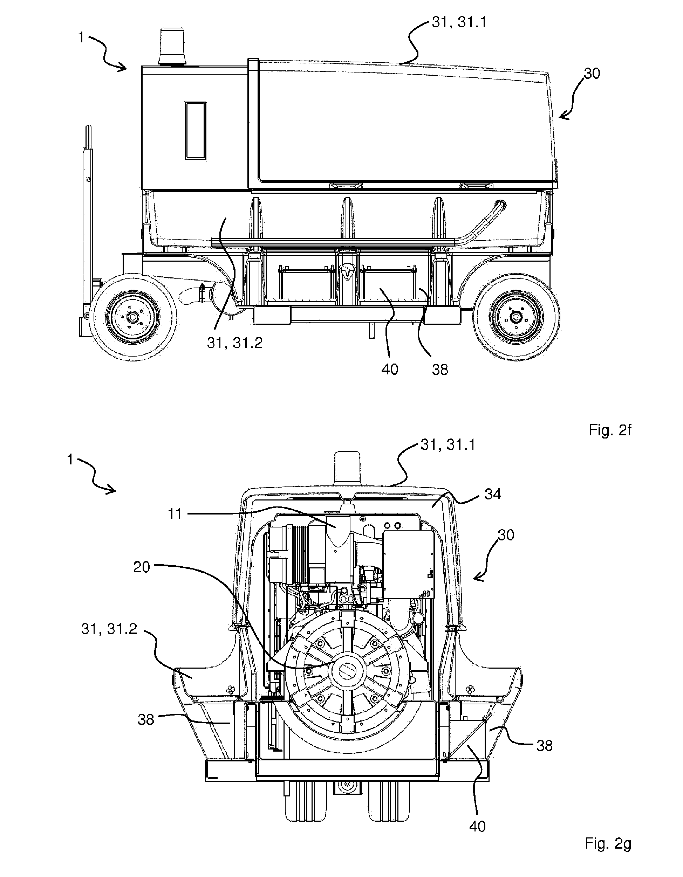

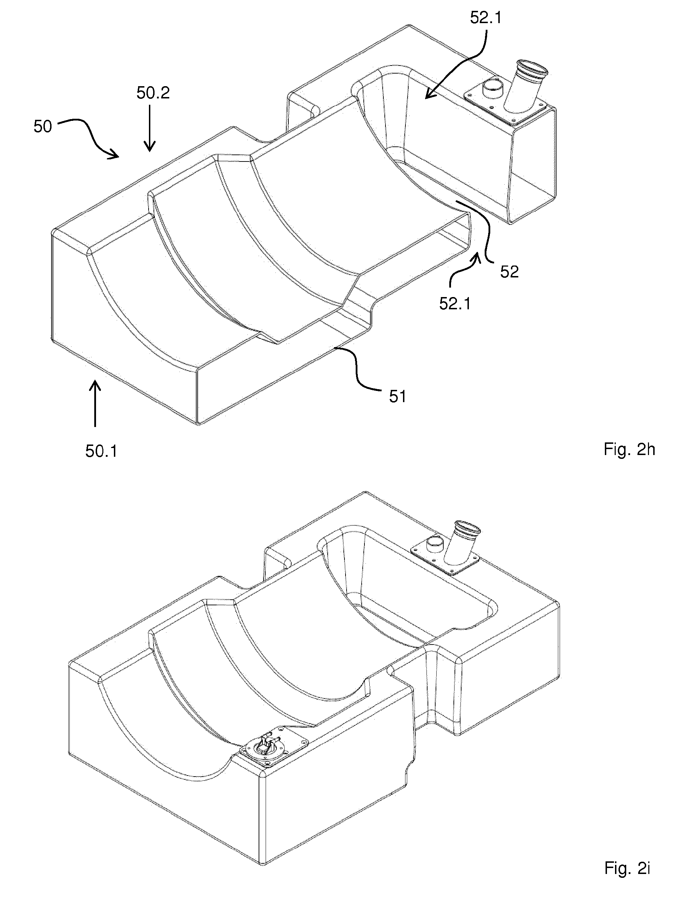

Fig. 2a-2i are showing a GPU 1 according to the invention based on Fig. 1 a and 1 b incorporating as well many of the advantageous preferred features. Fig. 2a is a side view, Fig. 2b a frontal view, Fig. 2c and d cross-sectional views, wherein in Fig. 2d, the canopy is retracted, Fig. 2e a bottom view of only the canopy, wherein the approximate position of the section of Fig. 2c and d is marked by a dash-dot-dotted line, Fig. 2f a side view with parts of the cable tray made transparent, Fig. 2g a back view with parts of the housing and canopy made transparent, Fig. 2h a section through the fuel tank and Fig. 2i the complete fuel tank.

The housing 30 features as the at least one rotor molded or rotor cast component 31 a canopy 31.1 covering at least the upper side of the engine 10 and the generator 20. The canopy 31.1 is configured to be slid off the engine 10 and the generator 20.

The canopy 31.1 comprises an inner wall 32 facing inside the housing 30 and an outer wall 33 facing outside the housing 30, wherein the inner wall 32 and the outer wall 33 define a hollow space 34 between each other. The outer wall 33 is having an area consisting of a single piece that is covering an upper side - here all the upper side - of the engine 10 and in this case also of the generator 20 and that extends downwards along three different vertical sides of the ground power unit 1. The inner wall 32 features a horizontal area covering the upper side of the engine 10 and is extending from the horizontal area downwards along three vertical sides of the ground power unit 1. The inner wall 32 is opposing the outer wall 33 on more than 75 % of the outer wall's 33 inner surface area. The canopy 31.1 consists of one single piece.

The canopy 31.1 comprises an integrated ducting system 35, whereby the ducting system comprises an inlet opening 35.1 and an inlet opening 35.1' within the outer wall 33 of the canopy 31.1. The inlet openings 35.1 and 35.1' are visible in Fig. 2e. They are positioned in a part of the outer wall 33 that is facing downwards, that prevents rain from falling into the duct system. The flow of air through the canopy 31.1 is depicted in Fig. 2c by a dashed arrow in case of the duct system for the engine air intake 11 and by a dash-dotted arrow in case of the duct system for the engine cooling. Those two duct functions are provided by the common hollow space 34 inside the canopy 31.1. The ducting system 35 comprises exhaust openings, i.e. opening 35.2 and opening 35.2', within the inner wall 32 of the canopy 31.1. The exhaust openings 35.2, 35.2' are located within the horizontal area of the inner wall 32. The exhaust opening 35.2 is located above the engine and covered by a heat shield 36 which is permeable to air. The exhaust opening 35.2' is surrounded by a seal 37, which connects to an air intake 11 of the engine 10. The exhaust opening 35.2 is set up for providing cooling air to the surrounding of the engine 10, whereas the exhaust opening 35.2' is set up to specifically direct air into the air intake 11 of the engine 10. The inlet openings 35.1, 35.1' are located on one end of the ground power unit 1, wherein this one end is vis-à-vis an other end of the ground power unit 1, wherein the other end of the ground power unit 1 comprises a housing exhaust, set up for letting escape used air out of the housing 30. Ventilator 60, arranged at the housing exhaust, is set up for propelling used air out of the housing 30.

The housing 30 also features as the at least one rotor molded or rotor cast component 31 two cable trays 31.2, wherein only one is referred by a reference sign, the other is just on the other side of the GPU 1. The tray 31.2 is arranged sideways in relation to the engine 10 and the electric generator 20. The cable tray 31.2 comprises an integrally molded battery compartment 38. A battery 40 is drawn in Fig. 2f and 2g to show how the battery fits inside the compartment 38 and is thereby protected by the walls of the tray. The compartment 38 is making use of the hollow space in the inside of the tray to accommodate the battery 40. The battery 40 is inserted through a top opening in the tray that is closed by a cover afterwards.

The GPU 1 further comprises a fuel tank 50, wherein the fuel tank 50 comprises a wall 51 that forms at least one channel 52 that allows air to pass from one side 50.1 of the tank to another side 50.2 of the fuel tank 50. The wall 51 of the fuel tank 50 is surrounding the channel 52 except for an inlet opening 52.1 and an outlet opening 52.2 of the channel 52. The channel 52 has an inlet on the bottom side of the fuel tank 50, which is the side 50.1, and an outlet on the top side of the fuel tank 50, which is the side 50.2. The channel 52 is located in the tank 50 at a position that is below and at one side of the generator 20 such that the generator 20 is in between the channel 52 and a ventilator 60 of the liquid cooling aggregate and therefore, an air stream will hit the generator 20. The channel 52 is furthermore positioned precisely at a generator 20 air intake. In Fig. 2c, the air flow due to the channel 22 is depicted by dashed arrows. With this invention, a better housing concept for a GPU is provided. The use of one or more rotor molded/cast components allows for a safer housing, which is also lighter and therefore easier to handle. Furthermore, the parts can be made bigger, as complex shapes can be mold and therefore, the housing does not have to be built out of many little parts. Especially, a canopy and a cable tray are suited for being rotor molded/cast components of the housing, as the canopy may be used as a good sound and collision damping and a ducting system, whereas the cable tray may also function as a bumper and safe housing for the batteries. Furthermore, when combining the canopy with a fuel tank, preferably also rotor molded/cast, with an integrated channel, a very effective air management in the housing is possible.

### Reference signs

- 1: ground power unit
- 10: engine
- 11: air intake
- 20: generator
- 30: housing
- 31: rotor molded or rotor cast component
- 31.1: canopy
- 31.2: cable tray
- 32: inner wall
- 33: outer wall
- 34: hollow space
- 35: ducting system
- 35.1: inlet opening
- 35.2: exhaust opening
- 36: heat shield
- 37: seal
- 38: battery compartment
- 40: battery
- 50: fuel tank
- 50.1: one side of fuel tank
- 50.2: other side of fuel tank
- 51: wall
- 52: channel
- 52.1: inlet opening
- 52.2: outlet opening
- 60: ventilator of the liquid cooling aggregate

## Claims

1. Mobile ground power unit (1) for supplying power to an aircraft parked on the ground, the ground power unit (1) standing on wheels and being set up to output 28 V of direct current and/or 115 V 400 Hz of alternating current comprising
- an engine (10) and
- an electric generator (20), whereby the electric generator (20) is configured to be driven by the engine (10),
- a housing (30) whereby the engine (10) and the electric generator (20) are disposed within the housing (30),
**characterized in that**
the housing (30) features at least one rotor molded or rotor cast component (31) that serves as an outer shell or part of an outer shell of the housing (30) whereby the housing (30) features as the at least one rotor molded or rotor cast component (31) one of:
- a canopy (31.1) covering at least the upper side of the engine (10) and/or the generator (20)
- a cable tray (31.2) arranged sideways in relation to the engine (10) and/or the electric generator (20).

2. Ground power unit (1) according to claim 1, wherein the canopy (31.1) comprises an inner wall (32) facing inside the housing (30) and an outer wall (33) facing outside the housing (30), wherein the inner wall (32) and the outer wall (33) define a hollow space (34) between each other.

3. Ground power unit (1) according to claim 2, wherein the canopy (31.1) comprises an integrated ducting system (35), whereby the ducting system (35) comprises an inlet opening (35.1, 35.1') within the outer wall (33) of the canopy (31.1).

4. Ground power unit (1) according to claim 3, wherein the ducting system (35) comprises an exhaust opening (35.2, 35.2') within the inner wall (32) of the canopy.

5. Ground power unit (1) according to claim 4, wherein the exhaust opening (35.2, 35.2') is located above and/or at the side of the engine (10).

6. Ground power unit (1) according to claim 5, wherein the exhaust opening (35.2) is covered by a heat shield (36) which is permeable to air.

7. Ground power unit (1) according to claim 5 or 6, wherein the exhaust opening (35.2') is surrounded by a seal (37), which connects to an air intake (11) of the engine (10).

8. Ground power unit (1) according to one of the previous claims, wherein the cable tray (31.2) comprises an integrally molded battery compartment (38).

9. Ground power unit (1) according to one of the previous claims, wherein the ground power unit (1) comprises a fuel tank (50), wherein the fuel tank (50) comprises a wall (51) that forms at least one channel (52) that allows air to pass from one side (50.1) of the fuel tank (50) to another side (50.2) of the fuel tank (50).

10. Ground power unit (1) according to claim 9, wherein the wall (51) of the fuel tank (50) is surrounding the channel (52) except for an inlet opening (52.1) and an outlet opening (52.2) of the channel (52).

11. Ground power unit (1) according to one of the claims 9 to 10, wherein the channel (52) has an inlet on the bottom side of the fuel tank (50) and an outlet on the top side of the fuel tank (50).

12. Component (31) of a housing (30) for a ground power unit (1) the ground power unit (1) standing on wheels and being set up to output 28 V of direct current and/or 115 V 400 Hz of alternating current wherein the ground power unit (1) comprises
- an engine (10) and
- an electric generator(20), wherein the electric generator (20) is configured to be driven by the engine(10),
**characterized in that** the component (31) is rotor molded or rotor cast and serves as an outer shell or part of an outer shell of the housing (30) whereby the component is one of:
- a canopy (31.1) configured for covering at least the upper side of the engine (10) and/or the generator (20)
- a cable tray (31.2) configured to be arranged sideways in relation to the engine (10) and/or the electric generator (20).

13. Method for manufacturing a mobile ground power unit (1) for supplying power to an aircraft parked on the ground, the ground power unit (1) standing on wheels and being set up to output 28 V of direct current and/or 115 V 400 Hz of alternating current, comprising the steps:
- mounting an engine (10) and an electric generator(20) and connecting the engine (10) and the electric generator (20) such that the electric generator (20) is configured to be driven by the engine (10);
- providing a housing (30) for the engine (10) and the electric generator (20);
**characterized in that**
providing the housing (30) comprises the step:
- building at least one component (31) of the housing (30) by rotor molding or rotor casting, wherein the at least one component (31) serves as an outer shell or part of an outer shell of the housing (30) whereby the component is one of:
- a canopy (31.1) for covering at least the upper side of the engine (10) and/or the generator (20)
- a cable tray (31.2) to be arranged sideways in relation to the engine (10) and/or the electric generator (20).

## Patentansprüche

1. Mobile Bodenversorgungseinheit (1) zum Versorgen eines Flugzeugs, das auf dem Boden geparkt ist, mit Energie, wobei die Bodenversorgungseinheit (1) auf Rädern steht und eingerichtet ist, 28 V Gleichstrom und/oder 115 V 400 Hz Wechselstrom auszugeben, umfassend:
- einen Motor (10) und
- einen elektrischen Generator (20), wobei der elektrische Generator (20) ausgelegt ist, von dem Motor (10) angetrieben zu werden,
- ein Gehäuse (30), wobei der Motor (10) und der elektrische Generator (20) innerhalb des Gehäuses (30) angeordnet sind,
**dadurch gekennzeichnet, dass**
das Gehäuse (30) mindestens eine rotationsgegossene oder rotationsgeformte Komponente (31) aufweist, die als Außenhülle oder Teil einer Außenhülle des Gehäuses (30) dient, wobei das Gehäuse (30) als die mindestens eine rotationsgegossene oder rotationsgeformte Komponente (31) eines der folgenden aufweist:
- ein Dach (31.1), das mindestens die Oberseite des Motors (10) und/oder des Generators (20) bedeckt,
- einen Kabelträger (31.2), der seitlich in Bezug auf den Motor (10) und/oder den elektrischen Generator (20) angeordnet ist.

2. Bodenversorgungseinheit (1) nach Anspruch 1, wobei das Dach (31.1) eine Innenwand (32), die dem Inneren des Gehäuses (30) zugewandt ist, und eine Außenwand (33), die dem Äußeren des Gehäuses (30) zugewandt ist, umfasst, wobei die Innenwand (32) und die Außenwand (33) einen Hohlraum (34) zwischen diesen definieren.

3. Bodenversorgungseinheit (1) nach Anspruch 2, wobei das Dach (31.1) ein integriertes Leitungssystem (35) umfasst, wobei das Leitungssystem (35) eine Einlassöffnung (35.1, 35.1') innerhalb der Außenwand (33) des Dachs (31.1) umfasst.

4. Bodenversorgungseinheit (1) nach Anspruch 3, wobei das Leitungssystem (35) eine Abgasöffnung (35.2, 35.2') innerhalb der Innenwand (32) des Dachs umfasst.

5. Bodenversorgungseinheit (1) nach Anspruch 4, wobei die Abgasöffnung (35.2, 35.2') über und/oder seitlich von dem Motor (10) angeordnet ist.

6. Bodenversorgungseinheit (1) nach Anspruch 5, wobei die Abgasöffnung (35.2) von einem Wärmeschild (36) bedeckt ist, das luftdurchlässig ist.

7. Bodenversorgungseinheit (1) nach Anspruch 5 oder 6, wobei die Abgasöffnung (35.2') von einer Dichtung (37) umgeben ist, die mit dem Lufteinlass (11) des Motors (10) verbunden ist.

8. Bodenversorgungseinheit (1) nach einem der vorhergehenden Ansprüche, wobei der Kabelträger (31.2) ein einstückig geformtes Batterieabteil (38) umfasst.

9. Bodenversorgungseinheit (1) nach einem der vorhergehenden Ansprüche, wobei die Bodenversorgungseinheit (1) einen Kraftstofftank (50) umfasst, wobei der Kraftstofftank (50) eine Wand (51) umfasst, die mindestens einen Kanal (52) bildet, der gestattet, dass Luft von einer Seite (50.1) des Kraftstofftanks (50) zu einer anderen Seite (50.2) des Kraftstofftanks (50) strömt.

10. Bodenversorgungseinheit (1) nach Anspruch 9, wobei die Wand (51) des Kraftstofftanks (50) den Kanal (52) mit Ausnahme einer Einlassöffnung (52.1) und einer Auslassöffnung (52.2) des Kanals (52) umgibt.

11. Bodenversorgungseinheit (1) nach einem der Ansprüche 9 bis 10, wobei der Kanal (52) einen Einlass an der Unterseite des Kraftstofftanks (50) und einen Auslass an der Oberseite des Kraftstofftanks (50) aufweist.

12. Komponente (31) eines Gehäuses (30) für eine Bodenversorgungseinheit (1), wobei die Bodenversorgungseinheit (1) auf Rädern steht und eingerichtet ist, 28 V Gleichstrom und/oder 115 V 400 Hz Wechselstrom auszugeben, wobei die Bodenversorgungseinheit (1) umfasst:
- einen Motor (10) und
- einen elektrischen Generator (20), wobei der elektrische Generator (20) ausgelegt ist, von dem Motor (10) angetrieben zu werden,
**dadurch gekennzeichnet, dass**
die Komponente (31) rotationsgegossen oder rotationsgeformt ist und als Außenhülle oder Teil einer Außenhülle des Gehäuses (30) dient, wobei die Komponente eines der folgenden ist:
- ein Dach (31.1), das ausgelegt ist, mindestens die Oberseite des Motors (10) und/oder des Generators (20) zu bedecken, - ein Kabelträger (31.2), der ausgelegt ist, seitlich in Bezug auf den Motor (10) und/oder den elektrischen Generator (20) angeordnet zu sein.

13. Verfahren zur Herstellung einer mobilen Bodenversorgungseinheit (1) zum Versorgen eines Flugzeugs, das auf dem Boden geparkt ist, mit Energie, wobei die Bodenversorgungseinheit (1) auf Rädern steht und eingerichtet ist, 28 V Gleichstrom und/oder 115 V 400 Hz Wechselstrom auszugeben, umfassend die folgenden Schritte:
- Montieren eines Motors (10) und eines elektrischen Generators (20) und Verbinden des Motors (10) und des elektrischen Generators (20) derart, dass der elektrische Generator (20) ausgelegt wird, von dem Motor (10) angetrieben zu werden;
- Bereitstellen eines Gehäuses (30) für den Motor (10) und den elektrischen Generator (20);
**dadurch gekennzeichnet, dass** das Bereitstellen des Gehäuses (30) den folgenden Schritt umfasst:
- Bauen mindestens einer Komponente (31) des Gehäuses (30) durch Rotationsgießen oder Rotationsformen, wobei die mindestens eine Komponente (31) als Außenhülle oder Teil einer Außenhülle des Gehäuses (30) dient, wobei die Komponente eines der folgenden ist:
- ein Dach (31.1), um mindestens die Oberseite des Motors (10) und/oder des Generators (20) zu bedecken,
- ein Kabelträger (31.2), um seitlich in Bezug auf den Motor (10) und/oder den elektrischen Generator (20) angeordnet zu sein.

## Revendications

1. Groupe électrogène de parc (1) mobile permettant d'alimenter en courant un aéronef stationné au sol, le groupe électrogène de parc (1) reposant sur des roues et étant réglé pour produire une tension à courant continu de 28 V et/ou une tension à courant alternatif de 115 V à 400 Hz comprenant :
- un moteur (10) ; et
- un générateur électrique (20), le générateur électrique (20) étant conçu pour être entraîné par le moteur (10) ;
- un boîtier (30), le moteur (10) et le générateur électrique (20) étant disposés à l'intérieur du boîtier (30),
**caractérisé en ce que** :
le boîtier (30) comprend au moins un composant moulé ou coulé dans un rotor (31) qui sert de carcasse extérieure ou de partie d'une carcasse extérieure du boîtier (30), le boîtier (30) comprenant en guise du au moins un composant moulé ou coulé dans un rotor (31) :
- un couvercle (31.1) couvrant au moins le côté supérieur du moteur (10) et/ou du générateur (20) ; ou
- un chemin de câbles (31.2) disposé latéralement par rapport au moteur (10) et/ou au générateur électrique (20).

2. Groupe électrogène de parc (1) selon la revendication 1, dans lequel le couvercle (31.1) comprend une paroi intérieure (32) faisant face à l'intérieur du boîtier (30), et une paroi extérieure (33) faisant face à l'extérieur du boîtier (30), la paroi intérieure (32) et la paroi extérieure (33) définissant entre elles un espace creux (34).

3. Groupe électrogène de parc (1) selon la revendication 2, dans lequel le couvercle (31.1) comprend un système de conduit intégré (35), le système de conduit (35) comprenant une ouverture d'entrée (35.1, 35.1') à l'intérieur de la paroi extérieure (33) du couvercle (31.1).

4. Groupe électrogène de parc (1) selon la revendication 3, dans lequel le système de conduit (35) comprend une ouverture de sortie (35.2, 35.2') à l'intérieur de la paroi intérieure (32) du couvercle.

5. Groupe électrogène de parc (1) selon la revendication 4, dans lequel l'ouverture de sortie (35.2, 35.2') est située au-dessus et/ou sur le côté du moteur (10).

6. Groupe électrogène de parc (1) selon la revendication 5, dans lequel l'ouverture de sortie (35.2) est couverte par un écran thermique (36) perméable à l'air.

7. Groupe électrogène de parc (1) selon la revendication 5 ou 6, dans lequel l'ouverture de sortie (35.2') est entourée par un joint (37), qui se connecte à une entrée d'air (11) du moteur (10).

8. Groupe électrogène de parc (1) selon l'une quelconque des revendications précédentes, dans lequel le chemin de câbles (31.2) comprend un compartiment à batterie intégralement moulé (38).

9. Groupe électrogène de parc (1) selon l'une quelconque des revendications précédentes, le groupe électrogène de parc (1) comprenant un réservoir de carburant (50), le réservoir de carburant (50) comprenant une paroi (51) qui forme au moins un canal (52) permettant à l'air de passer d'un côté (50.1) du réservoir de carburant (50) à un autre côté (50.2) du réservoir de carburant (50).

10. Groupe électrogène de parc (1) selon la revendication 9, dans lequel la paroi (51) du réservoir de carburant (50) entoure le canal (52) à l'exception d'une ouverture d'entrée (52.1) et d'une ouverture de sortie (52.2) du canal (52).

11. Groupe électrogène de parc (1) selon l'une quelconque des revendications 9 et 10, dans lequel le canal (52) comprend une entrée en bas du réservoir de carburant (50) et une sortie en haut du réservoir de carburant (50).

12. Composant (31) d'un boîtier (30) pour un groupe électrogène de parc (1), le groupe électrogène de parc (1) reposant sur des roues et étant réglé pour produire une tension à courant continu de 28 V et/ou une tension à courant alternatif de 115 V à 400 Hz, le groupe électrogène de parc (1) comprenant :
- un moteur (10) ; et
- un générateur électrique (20), le générateur électrique (20) étant conçu pour être entraîné par le moteur (10) ;
**caractérisé en ce que** :
le composant (31) est moulé ou coulé dans un rotor et sert de carcasse extérieure ou de partie d'une carcasse extérieure du boîtier (30), le composant étant :
- un couvercle (31.1) conçu pour couvrir au moins le côté supérieur du moteur (10) et/ou du générateur (20) ; ou
- un chemin de câbles (31.2) conçu pour être disposé latéralement par rapport au moteur (10) et/ou au générateur électrique (20).

13. Procédé de fabrication d'un groupe électrogène de parc (1) mobile permettant d'alimenter en courant un aéronef stationné au sol, le groupe électrogène de parc (1) reposant sur des roues et étant réglé pour produire une tension à courant continu de 28 V et/ou une tension à courant alternatif de 115 V à 400 Hz, et comprenant les étapes consistant à :
- monter un moteur (10) et un générateur électrique (20), et connecter le moteur (10) et le générateur électrique (20) de sorte que le générateur électrique (20) soit conçu pour être entraîné par le moteur (10) ;
- fournir un boîtier (30) pour le moteur (10) et le générateur électrique (20) ;
**caractérisé en ce que** :
la fourniture du boîtier (30) comprend l'étape consistant à :
- fabriquer au moins un composant (31) du boîtier (30) par moulage ou coulage dans un rotor, l'au moins un composant (31) servant de carcasse extérieure ou de partie d'une carcasse extérieure du boîtier (30), le composant étant :
- un couvercle (31.1) permettant de couvrir au moins le côté supérieur du moteur (10) et/ou du générateur (20) ; ou
- un chemin de câbles (31.2) devant être disposé latéralement par rapport au moteur (10) et/ou au générateur électrique (20).
